# EUROPÄISCHE PATENTSCHRIFT

(11) **EP 0 976 205 B1**
(45) Veröffentlichungstag und Bekanntmachung des Hinweises auf die Patenterteilung: **04.12.2002**
(21) Anmeldenummer: 97943757.1
(22) Anmeldetag: 09.09.1997
(51) Int. Cl.: H04B 3/58, H04B 3/54

(54) **VERFAHREN UND ANORDNUNG ZUR DATENÜBERTRAGUNG IN NIEDERSPANNUNGSNETZEN**
DATA TRANSFER METHOD AND SYSTEM IN LOW VOLTAGE NETWORKS
PROCEDE ET SYSTEME DE TRANSFERT DE DONNEES DANS LES RESEAUX BASSE TENSION

(30) Priorität: 27.03.1997 DE 19714386
(43) Veröffentlichungstag der Anmeldung: 02.02.2000
(73) Patentinhaber: Brandt, Frank, 12209 Berlin (DE)
(72) Erfinder: BRANDT, Frank, D-12209 Berlin (DE); LUKANEK, Frank, D-14052 Berlin (DE); HENSEN, Christian, D-33100 Paderborn (DE); SCHULZ, Wolfgang, D-33100 Paderborn (DE); SCHOENFELDT, Kay, D-30098 Paderborn (DE)
(74) Vertreter: Zimmermann & Partner
(86) Internationale Anmeldenummer: DE9702040
(87) Internationale Veröffentlichungsnummer: WO98044651

(56) Entgegenhaltungen:
- EP-A- 0 714 193
- EP-A- 0 735 700
- DE-A- 19 504 587
- GB-A- 2 293 950

## Beschreibung

Die Erfindung betrifft ein Verfahren zur Datenübertragung in Zweiweg-Kommunikation über Niederspannungsnetze, die an ein übergeordnetes Telekommunikationsnetz gekoppelt sind, sowie eine Anordnung zur Durchführung des Verfahrens.

Die Energieversorgungsunternehmen verfügen über stark verzweigte Stromversorgungsnetze, über die sie mit all ihren Kunden verbunden sind. Dieser Vorteil wird bereits seit langem über die bloße Lieferung von Energie hinaus, zum Beispiel bei der Tonfrequenz-Rundsteuerung, zur Datenübertragung bei Einweg-Kommunikationsnetzen genutzt, jedoch mit dem Nachteil, daß eine Rückmeldung nicht erfolgt.

In jüngerer Zeit sind jedoch auch Vorschläge unterbreitet worden, um unabhängig von anderen Netzbetreibern eine Nutzung der Niederspannungsnetze der Energieversorgungsunternehmen zur Zweigwege-Kommunikation zu ermöglichen. Während die Einwegkommunikation die bloße Erfassung von Daten, zum Beispiel Zählerstände von Strom, Gas, Wasser und dgl. oder die Meßwerterfassung von Temperatur, Druck usw. oder die Alarmaufnahme umfaßt, ermöglicht die Zweiwege-Kommunikation auch die Abfrage von Schaltzu-ständen und die Steuerung komplexer technischer Einrichtungen. Über die normale Datenübertragung hinaus ist das Niederspannungsnetz, mit dem die Stromversorger über eine komplette Verkabelung bis in die einzelnen Haushalte verfügen, aber auch für die normale Telefonie verwendbar. Nach einem bekannten diesbezüglichen Vorschlag müssen die das Niederspannungsnetz für die Telekommunikation nutzenden Stromversorger jedoch zum einen für als Datenfilter wirkende Einrichtungen sorgen, so daß die betreffenden Daten nur zu den Empfängern gelangen, für die sie bestimmt sind. Zum anderen sind in den Netzstationen Geräte für die Umsetzung der Daten auf ein die Stationen verbindendes Kupfer-, Funk- oder Glasfasernetz erforderlich. Bisher wird davon ausgegangen, daß an eine Netzstation 100 bis 200 Haushalte für die Stromversorgung angeschlossen werden können. Unter Einhaltung der europäischen Normung Celenec EN 50065-1 steht für die Datenkommunikation in dem festgelegten Frequenzband bis 95 kHz eine theoretisch nutzbare Datenrate für den Duplexbetrieb von max. 70 kbit/s zur Verfügung.

Aus der DE 195 04 587 A1 ist ein Zweiwege-Kommunikationssystem zur Datenübertragung zwischen einer Zentrale und Unterstationen sowie zwischen Zwischenstationen und Endverbrauchereinrichtungen bekannt. Die Zwischenstationen sind an das Niederspannungsnetz gekoppelte Knotencontroller, wobei zur Datenübertragung zwischen der Zentrale und den Unterstationen ein großflächiges Telekommunikationssystem, zum Beispiel ein Datenfunknetz oder ein leitungsgebundenes Netzwerk, insbesondere Lichtleiternetzwerk, genutzt wird. Die den Verteilnetztransformatoren zugeordneten Knotencontroller verfügen über Standardmodems als Schnittstelle zwischen dem Niederspannungsnetz und dem großflächigen Telekommunikationsnetz, während als Zwischenstation auf dem Übertragungsweg zwischen Knotencontroller und Endverbraucher-Einrichtung ein Modem mit Repeaterfunktion vorgesehen ist und die Übertragung im lokalen Niederspannungsnetzwerk mit einer Bandspreiztechnik durchgeführt wird.

Die Datenübertragung in Niederspannungsnetzen findet in dem in Europa zulässigen Frequenzbereich bis 148,5 kHz statt. In diesem Frequenzbereich ist aber die Übertragungsqualität zum einen durch eine Vielzahl hier auftretender Störsignale und ein starkes Rauschen eingeschränkt und zum anderen durch das schmalbandige Übertragungsband hinsichtlich der Teilnehmeranzahl und der Übertragungskapazität pro Teilnehmer begrenzt.

Der Erfindung liegt daher die Aufgabe zugrunde, ein Verfahren und eine Anordnung zur Nutzung des Niederspannungsnet-zes so auszubilden, daß gegenüber herkömmlichen Systemen bei hoher Datenübertragungsrate eine Verbesserung der Übertragungsqualität und der Übertragungssicherheit in ISDN-Qualität unter Einhaltung der Echtzeitsignalverarbeitung erreicht werden kann.

Erfindungsgemäß wird die Aufgabe bei einem Verfahren zur Datenübertragung in Zweiweg-Kommunikation mit einem an ein übergeordnetes Telekommunikationsnetz gekoppelten Niederspannungsnetz in der Weise gelöst, daß die Datenübertragung im Niederspannungsnetz in einem hochfrequenten Bereich bis etwa 30 Mhz mit einer Bandspreizung der Datensignale und einem Sendepegel unterhalb der vorgegebenen Funk- und Leitungsstörspannungsgrenze durchgeführt wird und die zur Gewährleistung einer Mehrbenutzerstruktur mit unterschiedlichen Sequenzen einer Familie von Pseudozufallszahlen gespreizten Signale zur Vorgabe einer logischen Richtung im Niederspannungsnetz mit einer Richtungskodierung versehen werden, wobei die jeweils nutzerspezifisch gespreizten und richtungsspezifisch gekennzeichneten binären Datenfolgen im Niederspannungsnetz in durch den Dämpfungsgrad bestimmten Abständen mit Hilfe der vorgegebenen Sequenzen durch Korrelation erkannt, regeneriert und mit einer neuen Richtungskennung für die Weiterleitung des Signals bewertet werden.

Alternativ kann der Prozeß der Sequenzgenerierung und der zusätzlichen Richtungskennung durch eine gezielte Auswahl von Sequenzen aus unterschiedlichen Sequenzfamilien durchgeführt werden. Dabei wird zur Richtungskennung in jedem Netzteilbereich für die Bandspreizung der einzelnen Nutzersignale eine andere Sequenzfamilie genutzt.

Die Funk- und Leitungsstörspannungsgrenzwerte sind in einem höheren Frequenzbereich, beispielsweise von 10 MHz, deutlich niedriger als im Frequenzbereich bis 148,5 kHz. Jedoch treten auch in diesem Bereich schmalbandige Störungen durch Oberwellen aus anderen Frequenzbereichen auf, und auch die normalen Funksender wirken sich in diesem Frequenzbereich noch störend auf die Datenübertragung aus. Andererseits dürfen aber die vorgeschriebenen, sehr niedrig liegenden maximalen Sendepegel nicht überschritten werden. Darüber hinaus kann ein mit niedrigem Pegel aufgegebenes Signal aufgrund des mit steigender Entfernung und steigender Frequenz zunehmenden Dämpfungsmaßes unter die Rauschgrenze absinken und dann als nicht gespreiztes Signal nicht mehr empfangen werden.

Wegen des niedrigen Sendepegels und der hohen Dämpfung in diesem Frequenzbereich gelangt das zu übertragende Signal bei dem vorgeschlagenen Verfahren bei einem Dämpfungsmaß von 50 bis 70 dB/100m unter die Rauschgrenze, kann aber bei erdverlegten Kabeln noch nach einer Entfernung von 100 Metern unterhalb der Rauschgrenze empfangen und erfolgreich regeneriert werden. Durch eine Richtungskodierung, die mit der Code-, Zeit- oder Frequenzmultiplextechnik durchgeführt wird, kann die beim Datentransport in Niederspannungsnetzen nicht mögliche physikalische Trennung in eine logische Trennung umgesetzt werden, so daß ein Duplexbetrieb möglich ist. Außerdem ist durch die Codemultiplextechnik eine Mehrnutzerstruktur gewährleistet. Durch Anwendung der Direktsequenz-Bandspreizung, bei der anstelle eines einzigen Informationssymbols in derselben Zeit eine Folge von Pseudozufallszahlen übertragen wird, erhöht sich die zur Übertragung benötigte Bandbreite um einen Faktor, der der Folge von Pseudozufallszahlen entspricht. Dadurch verlieren schmalbandige Störer und frequenzselektive Dämpfungseigenschaften ihren Einfluß auf das Übertragungssystem.

Mit dem vorgeschlagenen Verfahren der Datenübertragung in einem hohen Frequenzbereich ist es bei erdverlegten Kabeln möglich, eine kostengünstige bidirektionale Datenübertragung im Echtzeitverfahren über die Niederspannungsleitungen der Energieversorgungsunternehmen zu realisieren. Dabei können Übertragungskanäle in ISDN-Qualität mit einer Datenrate von 64 kbit/s zur Verfügung gestellt werden, und die gesamte Übertragungskapazität der Niederspannungsleitung zwischen den an diese angeschlossenen Nutzern und der Übergangsstelle zwischen Niederspannungsnetz und übergeordnetem Telekommunikationsnetz beträgt bei einer Bitfehlerrate von etwa 10⁻⁶ über 100m mindestens 2 Mbit/s jeweils für den Hin- und Rückkanal.

In weiterer Ausbildung der Erfindung erfolgt die nutzerspezifische Bandspreizung aus einer Familie von Pseudozufallsfolgen, z.B. Gold-Folgen. Zur Vermeidung der gegenseitigen Störung von Nutzern bzw. deren Endgeräten werden in verschiedenen Netzteilbereichen unterschiedliche Familien von Pseudozufallsfolgen verwendet.

In vorteilhafter Ausgestaltung wird die Vorgabe der logischen Richtung des Datenstroms nach der Code-Multiplextechnik durch Multiplikation des Datenstroms mit Walsh-Folgen vorgenommen, deren Länge kleiner als die der Bandspreizungssequenzen ist. Alternativ kann auf die zusätzliche Multiplikation mit Walsh-Folgen verzichtet werden, wenn für die Richtungskennung in unterschiedlichen Netzteilabschnitten speziell ausgesuchte, sich unterscheidende Pseudozufallsfolgen eingesetzt werden.Der Vorteil wäre ein geringerer Signalverarbeitungsaufwand in der Echtzeitsignalverarbeitung, der jedoch zu Lasten eines höheren Aufwandes in der Kanalverwaltung geht.

Nach einem weiteren Merkmal der Erfindung kann die Richtungstrennung für den Hin- und Rücklauf zur Vorgabe einer logischen Richtung im Niederspannungsnetz auch mit einem Zeit- und/oder Frequenzmultiplexverfahren durchgeführt werden, wobei die Übertragung der bandgespreizten Signale in der Sende- und der Empfangsrichtung in jeweils gesonderten Frequenzbändern oder gesonderten Zeitbereichen erfolgt.

In der vor der eigentliche Datenübertragung vorgesehenen Initialisierungsphase wird zunächst eine Initialisierungssequenz samt Identifikationsnummer des Nutzers sowie eine Anmeldesequenz ausgesendet und dem entsprechenden Nutzerendgerät dann mit der Identifikationsnummer eine Spreizungssequenz zugeteilt.
Die erfindungsgemäß Anordnung zur Durchführung des Verfahrens, die aus einem Niederspannungsnetz mit in dieses eingeschlossenen Nutzerendgeräten, Ortsverteilerkästen und Netzstationen sowie einem dem Niederspannungsnetz übergeordneten Telekommunikationsnetz besteht, wobei den Netzstationen als Verbindungsglied zwischen dem Niederspannungsnetz und dem Telekommunikationsnetz Netzübergangseinheiten zugeordnet sind und in das Niederspannungsnetz Signalaufbereitungseinheiten eingebunden sind, ist dadurch gekennzeichnet, daß die Netzübergangseinheiten, die in durch den Dämpfungsgrad bestimmten Abständen angeordneten Signalaufbereitungseinheiten und die Nutzerendgeräte zur Bandspreizung der Datensignale bei einem unterhalb der vorgegebenen Funk- und Störspannungsgrenze liegenden Sendepegel und zur Richtungskodierung der Datensignale ausgebildet sind und die Signalaufbereitungseinheiten zusätzlich zum Regenerieren und richtungsspezifischen Weiterleiten des Datenstromes vorgesehen sind.

Dem Nutzerendgerät ist ein CDMA-Prozessor zum Spreizen der Daten mit einer diesem zugewiesenen Spreizungssequenz und zum Aufprägen einer Richtungskennung, ein Modulator zum Aufmodulieren dieser Signale auf eine Trägerfrequenz, ein regelbarer Verstärker zur Anpassung des beim Empfänger notwendigen Eingangspegels für ein optimales Korrelatorergebnis sowie ein Netzkoppler zur Einspeidung des gespreizten und richtungskodierten Datenstroms in das Niederspannungsnetz zugeordnet. Die Empfängerstruktur gliedert sich in einen regelbaren Low-Noise-Eingangsverstärker, einen IQ-Demodulator, einen Entzerrer, vorzugsweise Rake-Receiver, und einen Kanalcodierer/-decodierer, z.B. Faltungscoder und Viterbi-Decoder, für die Übertragung aufbereitet. Ein Datenmultiplexer/-demultiplexer leitet die Daten an das Sprach- und Dateninterface weiter, das bei Bedarf für alle gängigen Schnittstellen (z.B. S₀, analog a/b, Ethernet) ausgelegt werden kann. Das Nutzerendgerät hat eine Geräteindentifikationskennung und zusätzlich ein SIM (Subscriber Identity Module), wodurch das System teilmobil eingesetzt werden kann. Alle Komponenten werden von einem Mikroprozessor und einer zentralen Taktversorgung gesteuert. Das Taktsignal wird über das empfangene Datensignal synchronisiert. Die Sende- und Empfangssignale werden über ein Filter oder eine Frequenzweiche einer Netzkoppeleinheit zugeführt, über die das Nutzerendgerät auch gleichzeitig seine Stromversorgung erfährt. Bei Stromausfall kann der Betrieb für eine begrenzte Zeit weitergeführt werden.

Die über Netzkoppler in das Niederspannungsnetz an Ortsverteilerkästen, in Laternenmasten und gegebenenfalls Hausanschlußkästen eingebundenen Signalaufbereitungseinheiten umfassen die gleichen Funktionsgruppen wie das Nutzerendgerät, jedoch sind die Funktionsgruppen der digitalen Signalverarbeitung (Entzerrer, CDMA-Prozessor, Kanalcodierer/-decodierer) und gegebenenfalls Teile der Taktsignalerzeugung entsprechend der Anzahl zu regenerierender Kanäle multipliziert mit der Anzahl der Signalrichtungen ausgelegt. Dabei werden die fehlerkorrigierten Datensignale aus dem Kanaldecoder direkt oder über eine Koppelmatrix in den nächsten Kanalcoder eingespeist. In das System ist auch - wie beim Nutzerendgerät - eine Geräteidentifikationskennung implementiert. Zusätzlich zeichnen sich die Signalaufbereitungseinheiten dadurch aus, daß in das System ein Wertespeicher integriert ist, in dem die aktuellen Kanalzuordnungen mit den entsprechenden Richtungskennungen und der zu nutzenden Sequenz sowie weitere Informationen zur Signalquelle und -senke abgelegt werden. Der Wertespeicher wird über den Mikroprozessor verwaltet.

Die Netzübergangseinheiten umfassen die gleichen Funktionsgruppen wie eine Signalaufbereitungseinheit, jedoch sind die Funktionsgruppen der digitalen Signalverarbeitung (Entzerrer, CDMA-Prozessor, Kanalcodierer/-decodierer) mehrfach entsprechend der Anzahl der zur übergeordneten Telekommunikationseinrichtung bereitgestellten Übertragungskanäle zuzüglich der pro Niederspannungsleitung benötigten Synchronisationskanäle ausgelegt. Weiterhin sind auch die Netzkoppler und die Frontends zur Niederspannung entsprechend der Anzahl der zu versorgenden Netzteilbereiche mehrfach ausgelegt.

Die dekodierten Datensignale werden über eine Koppelmatrix dem Übertragungssystem zugeführt, das auf der Telekommunikationsnetzseite die Signale in z.B. n * 2Mbit/s-Übertragungssysteme für Kupfer-, LWL-Leitungen oder Funkverbindungen aufbereitet, wobei sich n am Bedarf und den zur Verfügung stehenden Kapazitäten orientiert und in der Regel eine Zahl zwischen 1 und 3 darstellen wird.

Weiterhin wird mit einem Mikroprozessorsystem die Kanalzuteilung in der Netzübergangseinheit durch Konfiguration des Koppelfeldes und der CDMA-Prozessoren vorgenommen. Die Netzübergangseinheit hat ebenfalls eine Geräteidentifikationskennung und besitzt einen Wertespeicher, in dem die Daten aller aktiven Verbindungen, bestehend aus der Wegeinformation, der Kanalzuordnung, der Signalqualität während der Verbindung, der Nutzerendgerätekennung, der genutzten Dienste, und der zugeordnete Übertragungskanal zur übergeordneten Telekommunikationszentrale gespeichert sind. Optional können zwischen dem Koppelfeld und der Übertragungseinrichtung zum übergeordneten Telekommunikationsnetz auch noch Datenraten- und Protokollanpassungssysteme eingesetzt werden, die auf der Telekommunikationsseite mögliche - derzeitige oder künftige - Datenformate für einen Datendienst an die Systemstruktur der Datenübertragung über die Niederspannungsleitung anpassen.

Nach einem weiteren Merkmal der Erfindung sind in den Bereichen stark verzweigter Kabelverlegung der Niederspannung, z.B. in Ortsverteilerkästen, Netzstationen oder Bereichen von Industriestromkunden mit überdurchschnittlich schlechtem Störspektrum, bei Bedarf zusätzliche hochfrequente Dämpfungsmaßnahmen vorgesehen. Hierfür wird zum Beispiel zwischen dem Leitungsende im Verteilerkasten und einem Abgreifpunkt im Bereich der nicht aufgespleisten Niederspannungskabel ein Dämpfungselement für den Frequenzbereich der Datenübertragung eingebaut. Da die Datensignale durch die Dämpfungsmaßnahme, z.B. im Verteilerkasten, nicht mehr durch direkte Kabelkopplung oder durch elektromagnetische Kopplung aufgrund der abgestrahlten Signalleistung auf ein weiteres Leitungsende eines anderen Niederspannungskabels gekoppelt werden können, wird für jedes Leitungsende ein separater Netzkoppler genutzt, der dann mit der Signalaufbereitungseinheit oder auch passiv mit dem nächsten Netzkoppler verbunden wird.

Weitere Merkmale sowie zweckmäßige Weiterbildungen und Vorteile der Erfindung sind in den Unteransprüchen sowie in dem nachfolgend wiedergegebenen Ausführungsbeispiel dargestellt.

Ein Ausführungsbeispiel der Erfindung wird anhand der beigefügten Zeichnung näher erläutert. Es zeigen:
- Fig. 1: die Struktur eines Kommunikationsnetzes auf der Basis eines typischen Niederspannungsnetzes;
- Fig. 2: ein Blockschaltbild eines Nutzerendgerätes;
- Fig. 3: ein Blockschaltbild einer Signalaufbereitungseinheit mit einem Netzkoppler;
- Fig. 3a: ein Blockschaltbild einer Signalaufbereitungseinheit für mehrere Netzkoppler;
- Fig. 4: ein Blockschaltbild einer Netzübergangseinheit;
- Fig. 5: eine schematische Darstellung der Kennzeichnung der Datenströme zur Vorgabe einer logischen Richtung im Niederspannungsnetz;
- Fig. 6: eine schematische Darstellung zur Kennzeichnung der Frequenzvergabe und zur Definition von Bezugspunkten zur Pegelsteuerung;
- Fig. 7: ein Blockschaubild der Funktionskomponenten des übergeordneten Telekommunikationsnetzes; und
- Fig. 8: eine schematische Darstellung der Dämpfungsmaßnahmen gegen Störeinkopplungen an einem Ortsverteilerkasten mit Anschlußmöglichkeiten für eine Signalaufbereitungseinheit oder eine Netzübergangseinheit.

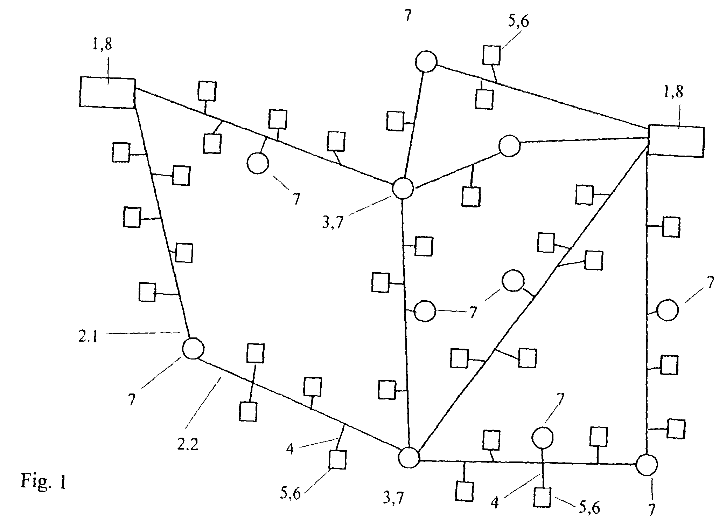

Die Grundstruktur des erfindungsgemäßen Kommunikationsnetzes entspricht der eines entsprechenden Niederspannungsnetzes. In diesem Kommunikationsnetz sind Netzstationen 1 über Niederspannungsleitungen 2 mit Ortsverteilerkästen 3 verbunden. An die Niederspannungsleitungen 2 zwischen den Ortsverteilerkästen 3 bzw. zwischen einem Ortsverteilkasten und einer Netzstation sind Abzweigleitungen 4 angeschlossen, die mit den einzelnen Nutzern 5 verbunden sind. Die Länge einer Niederspannungsleitung 2 zwischen zwei Ortsverteilerkästen 3 beträgt in Abhängigkeit vom Bebauungsgrad etwa 100 m bei Hochhaussiedlungen, 200 m bei Häuserreihen in der Innenstadt und bis zu 500 m in Einfamilienhausgebieten. Die Nutzer 5 sind in Fig. 1 nur beispielhaft dargestellt, tatsächlich ist deren Zahl wesentlich größer. Um die Funktion als Datenübertragungsnetz wahrnehmen zu können, sind den Nutzern Nutzerendgeräte 6 zugeordnet, deren Daten über die Niederspannungsleitungen 2 und zwischengeschaltete Signalaufbereitungseinheiten 7 zu den üblicherweise in oder in unmittelbarer Nähe der Netzstation 1 angeordneten Netzübergangseinheiten 8 sowie in umgekehrter Richtung geleitet werden. Alternativ kann die Netzübergangseinheit auch an jedem beliebigen Punkt der Niederspannungsieitungen 2, so auch bei den Ortsverteilerkästen 3, angeschlossen werden, sofern dieser Punkt für die Anbindung an die Leitungsstruktur des übergeordneten Telekommunikationsnetzes 48 günstig liegt.

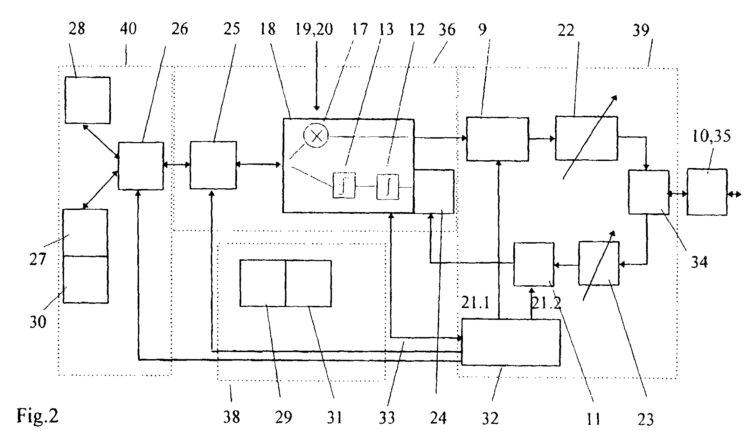

Eine konkrete Ausführungsform eines Nutzerendgerätes 6 besteht gemäß Fig. 2 im wesentlichen aus einer Interface-Funktionsgruppe 40, einem digitalen Signalverarbeitungssystem 36, einem Frontend zur Niederspannung 39 sowie einem Mikroprozessorsystem 38, die in der Zeichnung jeweils in einem durch strichpunktierte Linien begrenzten Bereich zusammengefaßt sind. Es umfaßt im einzelnen einem CDMA-Prozessor 18 mit Multiplizierer 17 sowie einen Verstärker 22, einen Modulator 9 und einen Netzkoppler 10, während die Empfängerstruktur einen Low-Noise-Eingangsverstärker 23, einen IQ-Demodulator 11, einen Entzerrer 24 und den CDMA-Prozessor 18 mit dem Integrator 12 und dem Schwellwertdetektor 13 einschließt. Des weiteren sind ein Kanalcodierer/-decodierer 25, ein Datenmultiplexer/-demultiplexer 26 zur Weiterleitung der Daten an ein Dateninterface 28 sowie ein Sprach- und Bedieninterface 27 vorgesehen. Außerdem verfügt das Nutzerendgerät 6 über eine Geräteidentifikationskennungseinheit 29, einen SIM (subscriber identity module) 30, einen Mikroprozessor 31 und eine Taktversorgungseinheit 32, wobei die durch einen Pfeil symbolisierten Synchronisations- und Taktsignale mit 33 bezeichnet sind. Über eine Frequenzweiche oder ein Frequenzfilter 34 und über den Netzkoppler 10 erfolgt der Anschluß an die Niederspannungsleitung 2, von der auch die Stromversorgungseinheit 35 für das Nutzerendgerät gespeist wird. Die Bezugszeichen 19, 20 und 21 bezeichnen jeweils die durch Pfeil markierte Spreizungssequenz bzw. die Richtungskennung bzw. die Trägerfrequenz.

Die Netzübergangseinheit 8 bildet jeweils die Verbindungsstelle zwischen dem Niederspannungskommunikationsnetz und dem üblicherweise für die Datenübertragung vorgesehenen Netzwerk (nicht dargestellt), zum Beispiel einem Datenfunknetz, einem Fernmelde- oder einem Lichtleiternetz. Die Netzübergangseinheit 8 hat also die Aufgabe, die Daten aus dem Niederspannungsnetz zu konzentrieren und über das übergeordnete Telekommunikationsnetz 48 an eine Zentrale zu senden bzw. die von der Zentrale empfangenen Daten in das Niederspannungsnetz zur Weiterleitung an die Nutzerendgeräte 6 einzuspeisen.

Zur Datenübertragung mittels der Direktsequenz-Bandspreiztechnik sendet das Nutzerendgerät 6 die unter Verwendung einer individuellen Zahlenfolge aufbereiteten Datensignale an die nächstgelegene Signalaufbereitungseinheit 7, wobei die von dieser empfangenen Daten durch Korrelation des Datenstroms mit der dem Nutzerendgerät 6 zugewiesenen Zahlenfolge detektiert werden. Die auf dem Weg von bzw. zu den Nutzerendgeräten 6 zur Regenerierung der Daten vorgesehenen Signalaufbereitungseinheiten 7 sind bei erdverlegten Leitungen in Abständen von etwa 100 m in den Ortsverteilerkästen, Lichtmasten oder Hausanschlußkästen angeordnet. In Haushaltsbereichen mit stark verzweigter Kabelverlegung und zusätzlich angeschlossenen Haushaltsgeräten, Zählern und dergleichen sind wegen der großen Dämpfung unter Umständen Signalaufbereitungen in Abständen von 20 bis 30 m erforderlich.

Die Sprach- und Datenübertragung in dem vorliegenden Niederspannungsnetz erfolgt in einem Frequenzband bis etwa 30 MHz unter Anwendung der Direktsequenz-Bandspreiztechnik unter Einbeziehung der Codemultiplextechnik, um einerseits den Einfluß schmalbandiger Störer zu unterdrücken und mit geringer Signalleistung große Entfernungen überbrücken zu können, und zwar möglichst ohne zwischenzeitliche Regeneration des Signals und zur Signaldetektion auch noch von verrauschten Signalen zur Erzielung größerer Reichweiten, und andererseits mehreren Nutzeren gleichzeitig eine Datenübertragung zu ermöglichen. Für die Datenübertragung in dem Codemultiplexsystem verwendet jedes Nutzerendgerät 6 eine eigene Zahlenfolge, die diesem, da nicht beliebig viele solcher Zahlenfolgen existieren, durch das übergeordnete Telekommunikationssystem über die zuständige Netzübergangseinheit 8 zugeordnet wird. Die Auswahl der Zahlenfolgen erfolgt zudem nicht willkürlich, sondern aus einer Codefamilie, und zwar einer Familie von beispielsweise Gold-Folgen, da dort die Anzahl der Sequenzen einer bestimmten Länge groß ist. Auf diese Weise ist die gegenseitige Beeinflussung der Nutzerendgeräte 6 so gering wie möglich.

Die für die Initialisierung notwendige Kommunikation des Nutzerendgerätes 6 mit der Netzübergangseinheit 8 erfolgt über die nächste Signalaufbereitungseinheit 7, bei der sich das Nutzerendgerät 6 mit einem Signal in Form einer für diesen Zweck reservierten Zahlensequenz, der sogenannten Initialisierungssequenz, anmeldet. Die umliegenden Signalaufbereitungseinheiten 7 antworten auf die Initialisierungssequenz mit einer Identifikation der Signalaufbereitungseinheit 7, deren Entfernung zur nächsten Netzübergangseinheit 8 und der Identifikationsnummer dieser Netzübergangseinheit.

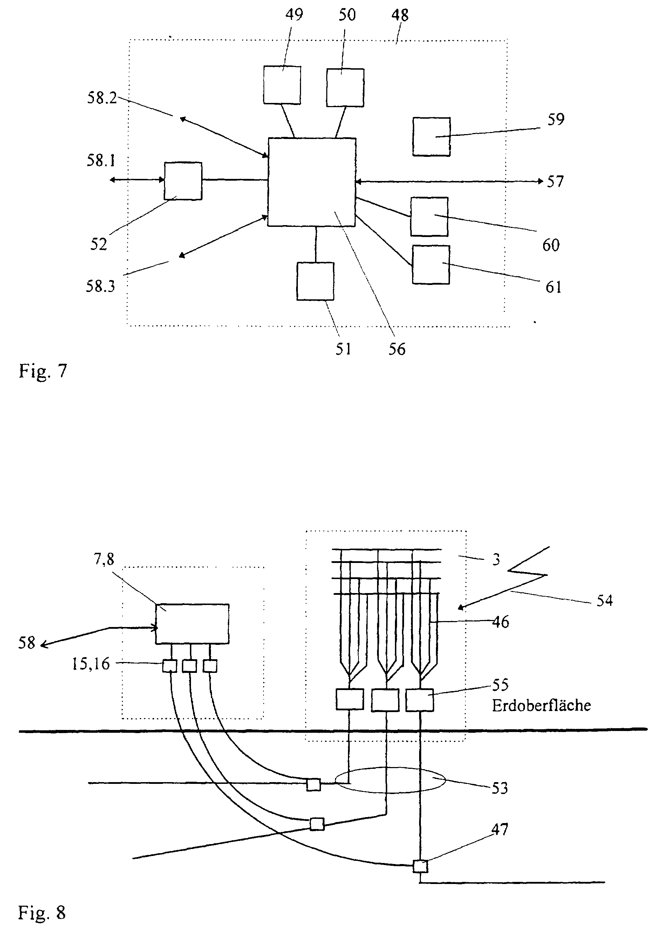

Bei der Darstellung der Funktionskomponenten des übergeordneten Telekommunikationsnetzes 48 sind das Koppelnetz mit 56, die Übertragungswege zum Teilnehmer mit 58, eine Transitstelle mit 57 und eine Mikroprozessoreinheit mit 59 bezeichnet. Über die zuerst angesprochene Netzübergangseinheit 8 wird die Initialisierung des neuen Nutzerendgerätes 6 an das übergeordnete Telekommunikationsnetz 48 weitergeleitet, indem dort die Lageinformation des neuen Nutzerendgerätes 6 registriert wird. Über die zentrale Abfrage der Daten eines SIM 30 des Nutzerendgerätes 6 kann, ähnlich wie in Funknetzen, in einem zentralen Heimatadressenregister 49 des übergeordneten Telekommunikationsnetzes 48 (Fig. 7) die Heimatadresse des Nutzerendgerätes 6 angemeldet werden, in dem dann bei Umzügen oder teilmobilen Einsätzen auch die jeweils aktuelle Lage in einem Besucherregister 50 speicherbar ist. Diese Register werden an einer zentralen Stelle des übergeordneten Telekommunikationsnetzes 48 verwaltet. In den Besucherregistern 50 sind neben wichtigen Teilnehmerdaten auch die um ein Nutzerendgerät 6 direkt umliegend angeordneten Signalaufbereitungseinheiten 7 oder Netzübergangseinheiten 8 eingetragen. Im Falle der Initialisierungsphase des Nutzerendgerätes 6 oder eines Gesprächsaufbaus von oder zum Nutzerendgerät wird in der Zentrale aufgrund der Registerinformation des Heimatadressen- und Besucherregisters 49, 50 die aktuelle Lage erkannt und in einem Server 51, in dem alle Signalaufbereitungseinheiten 7 und Netzübergangseinheiten 8 eines Versorgungsgebietes registriert sind, werden mindestens drei der kürzesten möglichen Verbindungen errechnet. In den Netzübergangseinheiten 8 zugeordneten zentralen Überwachungsstationen 52 werden die im Server 51 ermittelten möglichen Übertragungswege auf ihre Verkehrsauslastung hin untersucht. Der günstigste Weg wird ausgewählt. Alternativ werden im Server 51 neue Wege berechnet. Die so ermittelte Netzübergangseinheit 8 und die weiteren Signalaufbereitungseinheiten 7 reservieren daraufhin für den angeforderten Übertragungskanal die in den einzelnen Netzteilbereichen 2.1, 2.2 (Fig. 1) benötigten Pseudozufallszahlenfolgen (Spreizungssequenz "19"), da dem Nutzerendgerät 6 während der Initialisierungsphase noch keine eigene Sequenz zugewiesen ist. Die einzelnen Familien der Pseudozufallsfolgen werden für die einzelnen Netzübergangseinheiten 8 und Signalaufbereitungseinheiten 7 vom übergeordneten Telekommunikationsnetz 48 in einer Netzkonfigurationsphase festgelegt. Neben der Festlegung des optimalen Übertragungsweges wird im übergeordneten Telekommunikationsnetz 48 während der Initialisierungsphase in einem Kontrollregister für die Teilnehmerberechtigung 60 und in einem Kontrollregister für die Endgerätezulassung 61 auch noch die Teilnehmerzugangsberechtigung und die Identifikationsnummer des Endgerätes überprüft.

Nach Freigabe des Nutzerendgerätes wird diesem dann eine von der Netzübergangseinheit 8 oder der Signalaufbereitungseinheit 7 ausgewählte Spreizungssequenz übermittelt, die aus einer Familie von Gold-Folgen stammt. Damit sich aber in einer mit mehreren Netzübergangseinheiten 8 verbundenen Signalaufbereitungseinheit 7 die Signale von mit anderen Netzübergangseinheiten 8 kommunizierenden Nutzerendgeräten 6 im wesentlichen nicht stören, werden benachbarten Netzübergangseinheiten 8 unterschiedliche Familien von Gold-Folgen durch das übergeordnete Telekommunikationsnetz 48 zugewiesen. Dadurch wird die gegenseitige Beeinflussung zweier nicht mit derselben Netzübergangseinheit 8 kommunizierender Nutzerendgeräte 6 minimiert. Bei der Übermittlung der Spreizungssequenz an das Nutzerendgerät 6 wird wieder die Gerätenummer des Endgerätes mitübertragen, so daß ein anderes, sich gerade in der Initialisierungsphase befindliches Nutzerendgerät diese Pseudozufallszahlenfolgen nicht für sich beanspruchen kann. Zum Abschluß der Initialisierungsphase sendet das Nutzerendgerät 6 eine Empfangsbestätigung, die bereits mit der zugewiesenen Zahlenfolge gespreizt ist. Die Initialisierung kann unmittelbar nach dem Einschalten des Endgerätes vorgenommen werden. Dann wird auch ohne Datenübertragung eine Pseudozufallszahlenfolge belegt. Zum anderen kann die Initialisierung bei tatsächlich vorhandenem Kommunikationsbedarf durchgeführt werden, wobei in diesem Fall die Kommunikation nur vom Endgerät aus gestartet werden kann. Eine dritte Möglichkeit besteht in einer Minimalinitialisierung beim Einschalten des Nutzerendgerätes 6, wobei in diesem Fall die Pseudozufallszahlenfolge erst vor einer Datenübertragung vergeben wird.

Zur Datenübertragung werden die Nutzerdaten, wie das Blockschaltbild eines Nutzerendgerätes 6 gemäß Fig. 2 zeigt, mit der dem Nutzerendgerät zugeordneten Spreizungssequenz gespreizt. Außerdem erfolgt zur Vorgabe einer Datenstromrichtung eine bestimmte Zuordnung einer Sequenzfamilie oder eine Multiplikation des Datenstroms mit einer Walsh-Folge, so daß die Daten in einer gewünschten Richtung durch das Niederspannungsnetz übertragen werden können. Die so erzeugte binäre Datenfolge wird mit einem dem Nutzerendgerät 6 zugeordneten Modulator 9 auf eine Trägerschwingung moduliert und dann über einen Netzkoppler 10 in die Niederspannungsleitung 2 zur Weiterleitung an eine Signalaufbereitungseinheit 7 eingespeist.

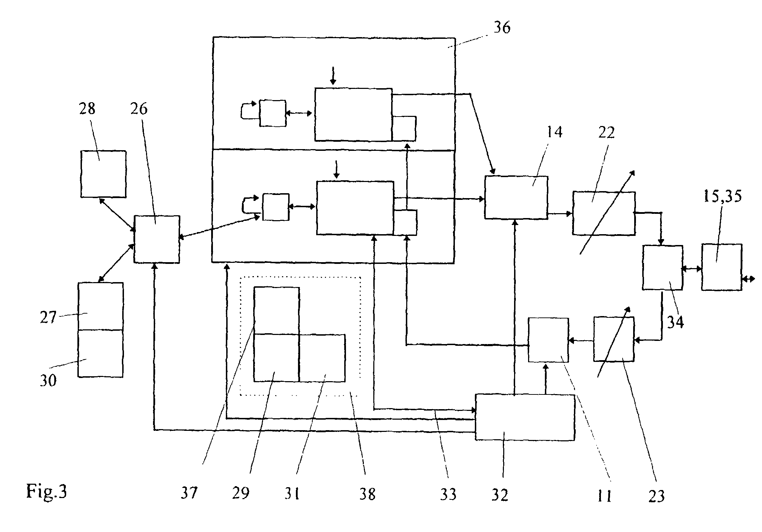

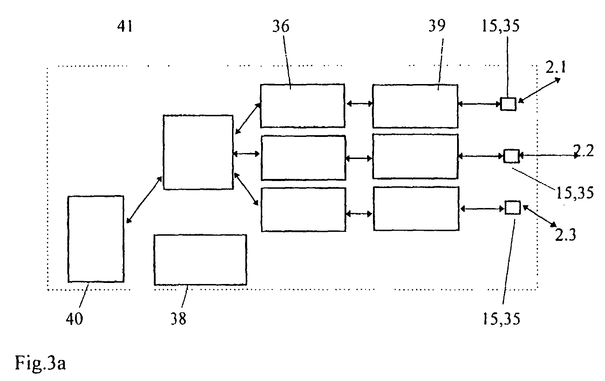

Entsprechend dem in Fig. 3 dargestellten Blockschaltbild einer Signalaufbereitungseinheit 7, bei der gegenüber dem in Fig. 3 dargestellten Nutzerendgerät 6 der Modulator mit 14 und ein dem Mikroprozessorsystem 38 zugeordneter Wertespeicher mit 37 bezeichnet ist, werden die an einem Netzkoppler 15 eingekoppelten Daten mit Hilfe eines Demodulators 11 sowie eines Entzerrers 24, eines Integrators 12 und eines Schwellwertdetektors 13 wiedergewonnen. Die regenerierten Daten werden dann erneut mit der dem Nutzerendgerät 6 zugeteilten Sequenz bandgespreizt und für die Übertragungsrichtung beispielsweise mit einer Walsh-Folge gekennzeichnet. Im Modulator 14 wird eine Trägerschwingung mit den binären Daten moduliert und anschließend erfolgt über den Netzkoppler 15 die Aussendung des aufbereiteten Signals.

Die in Fig. 3 gezeigte Signalaufbereitungseinheit ist für die Signalaufbereitung an einer durchgehenden Niederspannungsleitung vorgesehen. Prinzipiell kann diese Komponente unter Ausnutzung von Übersprecheffekten auch in Ortsverteilerkästen 3 oder in Netzübergangseinheiten 8 eingesetzt werden, jedoch empfiehlt sich dann die Anwendung von Dämpfungsmaßnahmen gemäß Fig. 8. Die so entkoppelten Netzteilbereiche müssen dann über eine Signalaufbereitungseinheit nach Fig. 3a verknüpft werden, die für jeden Netzteilbereich einen eigenen Netzkoppler 15, Frontend zur Niederspannung 39 und ein digitales Signalverarbeitungssystem 36 benötigen. Über eine Koppelmatrix 41 (Fig. 3a) werden dann die regenerierten Datensignale den richtigen Netzteilbereichen zugeordnet.

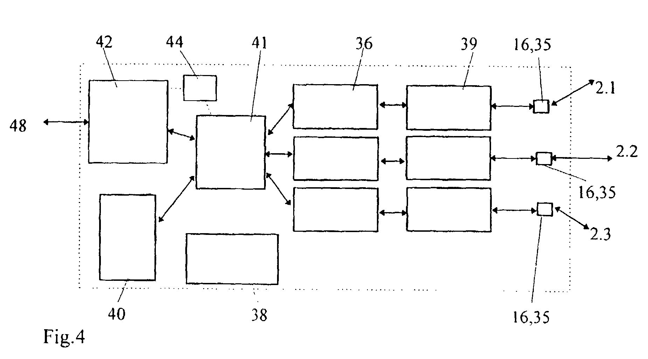

Aus der in Fig. 4 dargestellten Netzübergangseinheit 8 wird deutlich, daß deren Aufbau einer Signalaufbereitungseinheit gleicht, der hinter dem Koppelfeld nur noch durch das Übertragungssystem 42 zum übergeordneten Telekommunikationsnetz 48 ergänzt ist. Optional kann der Netzübergangseinheit noch ein Daten- und Protokollanpassungssystem 44 zugeordnet sein, in dem die Datensignale von der Niederspannungsseite an die Protokollstrukturen eines schon bestehenden Systems für ein übergeordnetes Telekommunikationsnetz (z.B. Dect-Backbone-Strukturen) angepaßt werden.

Der Vorgang der Signalaufbereitung unter Anwendung der Direktsequenz-Bandspreiztechnik und der Codemultiplextechnik wiederholt sich so oft, bis das Signal die Strecke zwischen dem Nutzerendgerät 6 und der Netzübergangseinheit 8 in der einen oder der anderen Richtung zurückgelegt hat. Dabei unterscheidet sich die Datenübertragung in der Richtung vom Nutzerendgerät zur Netzübergangseinheit von der in der entgegengesetzten Richtung nur unwesentlich. Für beide Richtungen erfolgt die Wegeauswahl über die Netzübergangseinheit 8 und über die Signalaufbereitungseinheit 7 durch den im übergeordneten Telekommunikationsnetz 48 angesiedelten Server 51.

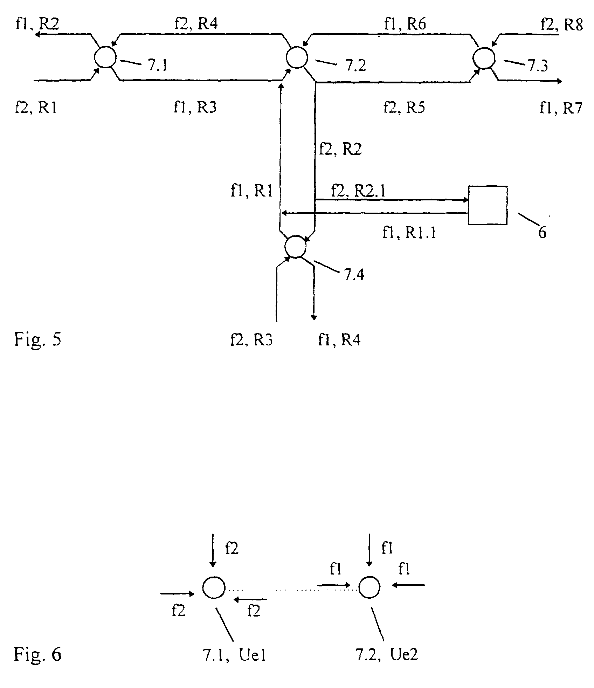

Fig. 5 gibt das Prinzip der Richtungskennung der Datenströme ausgesuchter Sequenzfamilien oder mit den Walsh-Folgen, deren Länge kleiner als die der verwendeten Spreizungssequenzen ist, wieder. Am Beispiel der Walsh-Folgen wird erläutert, wie eine Kennzeichnung der Datenströme in der Weise vorgenommen werden kann, daß beispielsweise die von der Signalaufbereitungseinheit 7.1 an die Signalaufbereitungseinheit 7.3 zu sendenden Daten eine Richtungskennung R3 erhalten. Die Signalaufbereitungseinheit 7.2 kann, wie aus Fig. 5 ersichtlich ist, Daten mit der Richtungskennung R3 erkennen und versieht dieses Signal nach der Regenerierung mit der Richtungskennung R5. Das derart gekennzeichnete, ausgesendete Signal wird nur von der Signalaufbereitungseinheit 7.3 regeneriert und - versehen mit der neuen Richtungskennung R7 - an die nächste Signalaufbereitungseinheit weitergeleitet. Da das hier verwendete physikalische Medium im Gegensatz zu anderen Kommunikationsnetzen in den einzelnen Signalaufbereitungseinheiten nicht getrennt werden kann, werden die gekennzeichneten Datenströme zwar auch von anderen Signalaufbereitungseinheiten empfangen, aber nicht regeneriert, nicht gekennzeichnet und nicht erneut ausgesendet. Das heißt, die jeweiligen Signalaufbereitungseinheiten bereiten nur Signale mit der für sie vorgesehenen spezifischen Richtungskennung auf. So empfängt die Signalaufbereitungseinheit 7.1 zwar den von der Signalaufbereitungseinheit 7.2 regenerierten und gekennzeichneten Datenstrom R5 und R2, aber bereitet ihn nicht auf, da sie, wie Fig. 5 zeigt, nur Datenströme mit der Richtungskennung R1 und R4 erkennt. Auf diese Weise wird die unter den vorliegenden Bedingungen nicht mögliche physikalische Trennung in eine logische umgesetzt.

Die gleiche physikalische Trennung gilt auch für Signale, die das Nutzerendgerät 6 erreichen sollen. In der in Fig. 5 dargestellten Anordnung sind die Signalaufbereitungseinheiten 7.2 und 7.4 und das Nutzerendgerät so konfiguriert, daß das Nutzerendgerät 6 von der Signalaufbereitungseinheit 7.2 gespeist und auch abgefragt wird. Diese Sendesignale mit der Richtungskennung R2 werden von der Signalaufbereitungseinheit 7.4 regeneriert, jedoch mit Ausnahme des Richtungssignais R2.1, das für den auf diesem Streckenabschnitt angeschalteten Nutzer bestimmt ist und deshalb beim Regenerieren in 7.4 nicht mehr berücksichtigt wird. Die Einstellung der Wege, auf denen welches Signal empfangen und ggf. regeneriert und verstärkt wird, erfolgt über den zentralen Server 51 im übergeordneten Telekommunikationssystem 48.

Fig. 6 gibt das Prinzip der Richtungsaufteilung für die Hin- und Rückrichtung für zwei Frequenzen an. Am Beispiel der Signalaufbereitungseinheit 7.1 wird deutlich, daß die Empfangssignale nur auf der Frequenz f2 und dementsprechend die Ausgangssignale in alle Richtungen nur auf der Frequenz f1 abgesetzt werden. Bei der benachbarten Signalaufbereitungseinheit 7.2 sind die Sende- und Empfangsfrequenzen entsprechend vertauscht. Bei ringförmig angeordneten Signalaufbereitungseinheiten ist auf eine gerade Anzahl der Systeme zu achten, jedoch müssen alternativ zwei weitere Frequenzbänder für die Übertragung genutzt werden. Die Richtungsaufteilung über Frequenzen ist notwendig, da sich sonst die Sende- und Empfangssignale überlagern und der Empfangskorrelator durch ein zu hohes Sendesignal blockiert wird. Zur Verbesserung des S/N-Abstandes beim Empfänger müssen die Ausgangsverstärker aller Sendesignale für diese Empfangsfrequenz auf den Pegel des am weitesten liegenden Empfängers abgestimmt werden. Wenn das die Signalaufbereitungseinheit 7.1 ist, müssen alle Sender der Frequenz f2 auf den Pegel Ue1 am Empfänger der Signalaufbereitungseinheit 7.1 ausgeregelt werden. Das Prinzip der Richtungsaufteilung für die Hin- und Rückrichtung kann alternativ zur Frequenzbandaufteilung auch durch eine Zeitabschnittsaufteilung erfolgen, wobei zwischen den Zeitabschnitten für die Hin- und Rückrichtung jeweils ein Zeitpuffer erforderlich ist.

Gemäß Fig. 8 sind bei einem Ortsverteilerkasten 3 mit stark verzweigtem Kabelsystem 53 zwischen den Leitungsenden 46 im Ortsverteilerkasten 3 und einem Abgreifpunkt 47 an dem nicht aufgespleisten Niederspannungskabel hochfrequente Dämpfungselemente 55 vorgesehen, um die Wirkung von mit dem Pfeil 55 bezeichneten Störspannungseinkopplungen zu mindern. Dabei ist an jedem Abgreifpunkt 47 über eine Zuleitung ein Netzkoppler 15, 16 angeschaltet, mit dem die Signalaufbereitungseinheit 7 bzw. die Netzübergangseinheit 8 verbunden ist.

### Bezugszeichenliste:

- 1: Netzstation
- 2, 2.1, 2.2: Niederspannungsleitung
- 3: Ortsverteilerkasten
- 4: Abzweigleitung
- 5: Nutzer (Hausanschlußkasten)
- 6: Nutzerendgerät
- 7, 7.1, 7.2: Signalaufbereitungseinheit
- 8: Netzübergangseinheit
- 9: Modulator von 6
- 10: Netzkoppler von 6
- 11: Demodulator
- 12: Integrator
- 13: Schwellwertgeber
- 14: Modulator von 7
- 15: Netzkoppler von 7
- 16: Netzkoppler von 8
- 18: CDMA-Prozessor
- 19: Spreizungssequenz
- 20: Richtungskennung
- 21.1, 21.2: Trägerfrequenz
- 22: regelbarer Ausgangsverstärker
- 23: regelbarer Low-Noise-Eingangsverstärker
- 24: Entzerrer
- 25: Kanalcoder/-decoder
- 26: Datenmultiplexer/-demultiplexer
- 27: Sprach- und Bedieninterface
- 28: Dateninterface
- 29: Geräteidentifikationskennungseinheit
- 30: SIM (subscriber identity module)
- 31: Mikroprozessor
- 32: Taktversorgungseinheit
- 33: Synchronisations-/Taktsignal
- 34: Frequenzweiche, Frequenzfilter
- 35: Stromversorgungseinheit oder Notstromversorgungseinheit
- 36: digitales Signalverarbeitungssystem
- 37: Wertespeicher
- 38: Mikroprozessorsystem
- 39: Frontend zur Niederspannung
- 40: Interface-Funktionsgruppen
- 41: Koppelmatrix
- 42: Übertragungssystem
- 43: -
- 44: Datenraten- und Protokollanpassungssystem
- 45: -
- 46: Leitungsende in 3, Störquelleneinkopplung
- 47: Abgreifpunkt, Einkopplung f. Datenübertragung
- 48: übergeordnetes Telekommunikationsnetz
- 49: Heimatadressenregister
- 50: Besucherregister
- 51: Server
- 52: zentrale Überwachungsstation
- 53: verzweigtes Kabelsystem
- 54: Störspannungseinkopplung
- 55: Dämpfungselement
- 56: Koppelnetz in 48
- 57: Transitstelle
- 58: Übertragungsweg zum Teilnehmer
- 59: Mikroprozessoreinheit in 48
- 60: Kontrollregister f. d. Teilnehmerberechtigung
- 61: Kontrollregister für die Endgerätezulassung
- R1, R2 usw.: Richtungskennung
- f1, f2: Modulationsfrequenzen
- Ue1, Ue2: Empfangspegel

## Patentansprüche

1. Verfahren zur Datenübertragung in Zweiweg-Kommunikation über Niederspannungsnetze, die an ein übergeordnetes Telekommunikationsnetz gekoppelt sind, **dadurch gekennzeichnet, daß** die Datenübertragung im Niederspannungsnetz in einem hochfrequenten Bereich bis 30 MHz mit einer Bandspreizung der Datensignale und einem Sendepegel unterhalb der vorgegebenen Funk- und Leitungstörspannungsgrenze durchgeführt wird und die zur Gewährleistung einer Mehrbenutzerstruktur mit unterschiedlichen Sequenzen einer Familie von Pseudozufallszahlen gespreizten Signale zur Vorgabe einer logischen Richtung im Niederspannungsnetz mit einer Richtungskodierung versehen werden, wobei die jeweils nutzerspezifisch gespreizten und richtungsspezifisch gekennzeichneten binären Datenfolgen im Niederspannungsnetz in durch den Dämpfungsgrad bestimmten Abständen mit Hilfe der vorgegebenen Sequenzen durch Korrelation erkannt, regeneriert und mit einer neuen Richtungskennung für die Weiterleitung der Signale bewertet werden.

2. Verfahren nach Anspruch 1, **dadurch gekennzeichnet, daß** die nutzerspezifische Bandspreizung der Datensignale mit Sequenzen einer oder mehrerer abgestimmter Familien von Pseudozufallszahlenfolgen, wie z.B. Gold-Folgen, erfolgt.

3. Verfahren nach Anspruch 2, **dadurch gekennzeichnet, daß** zur Vermeidung der gegenseitigen Störung von in unterschiedlichen Netzteilbereichen angeordneten Nutzern benachbarte Pseudozufallszahlenfolgen keine gleichartigen Sequenzen beinhalten.

4. Verfahren nach einem der Ansprüche 1 bis 3, **dadurch gekennzeichnet, daß** die Vorgabe der logischen Richtung des Datenstroms im Niederspannungsnetz nach der Bandspreizung mit Direktsequenztechnik durch Multiplikation des Datenstroms mit einer Walsh-Folge vorgenommen wird.

5. Verfahren nach Anspruch 4, **dadurch gekennzeichnet, daß** die Länge der für die Richtungskodierung vorgesehenen Walsh-Folgen kleiner als die der verwendeten Bandspreizsequenzen ist.

6. Verfahren nach einem der Ansprüche 1 bis 3, **dadurch gekennzeichnet, daß** die Vorgabe der logischen Richtung des Datenstroms im Niederspannungsnetz durch gezielte strukturierte Zuordnung ausgesuchter Familien von Pseudozufallszahlenfolgen zu einzelnen Netzteilbereichen erfolgt, die von zwei Signalaufbereitungseinheiten oder einer Netzübergangseinheit und einer Signalaufbereitungseinheit eingeschlossen sind.

7. Verfahren nach einem der Ansprüche 1 bis 3, **dadurch gekennzeichnet, daß** zur Richtungstrennung in einem Zeit- oder Frequenz-Multiplexverfahren die Übertragung der bandgespreizten Signale in der Sende- und der Empfangsrichtung in jeweils gesonderten Zeitabschnitten oder Frequenzbändern erfolgt.

8. Verfahren nach einem der Ansprüche 1 bis 7, **dadurch gekennzeichnet, daß** die Sendepegel der einzelnen Sendeeinheiten eines Netzteilbereichs so geregelt werden, daß an den Empfängern der Signalaufbereitungseinheit oder der Netzübergangseinheit alle überlagerten Signale einer Frequenz im kontrollierten Zeitabschnitt nahezu den gleichen Pegel aufweisen.

9. Verfahren nach einem der Ansprüche 1 bis 8,**dadurch gekennzeichnet, daß** vor der eigentlichen Datenübertragung eine Initialisierungsphase durch Aussendung einer Initialisierungssequenz samt Identifikationsnummer des jeweiligen Nutzers und des Nutzerendgerätes und einer Anmeldesequenz sowie eine darauf folgende Zuteilung einer Spreizungssequenz für den jeweiligen Nutzer vorgesehen ist.

10. Verfahren nach Anspruch 9,**dadurch gekennzeichnet, daß** die Identifikationskennzeichen des jeweiligen Nutzers und des Nutzerendgerätes nach dem Aussenden der Initialisierungssequenz im übergeordneten Telekommunikationsnetz hinsichtlich der Zulassung des Nutzerendgerätes und der Kommunikationsberechtigung des Nutzers überprüft werden.

11. Verfahren nach Anspruch 9,**dadurch gekennzeichnet, daß** mit der Initialisierungssequenz Notrufsignale absetzbar sind.

12. Anordnung zur Durchführung des Verfahrens nach Anpruch 1-11, bestehend aus einem Niederspannungsnetz mit an dieses angeschlossenen Nutzerendgeräten, Ortsverteilerkästen und Netzstationen sowie einem dem Niederspannungsnetz übergeordneten Telekommunikationsnetz, wobei den Netzstationen als Verbindungsglied zwischen dem Niederspannungsnetz und dem Telekommunikationsnetz Netzübergangseinheiten zugeordnet sind und in das Niederspannungsnetz Signalaufbereitungseinheiten eingebunden sind, **dadurch gekennzeichnet, daß** die Netzübergangseinheiten (8), die in durch den Dämpfungsgrad bestimmten Abständen angeordneten Signalaufbereitungseinheiten (7) und die Nutzerendgeräte (6) zur Bandspreizung der Datensignale bei einem unterhalb der vorgegebenen Funkund Störspannungsgrenze liegenden Sendepegel und zur Richtungskodierung der Datensignale ausgebildet sind und die Signalaufbereitungseinheiten (7) zusätzlich zum Regenerieren und richtungsspezifischen Weiterleiten des Datenstromes vorgesehen sind.

13. Anordnung nach Anspruch 12, **dadurch gekennzeichnet, daß** dem Nutzerendgerät (6) die Funktionseinheiten Netzkoppler (10), Frequenzweiche oder Filter (34), regelbarer Low-Noise-Eingangsverstärker (23), IQ-Demodulator (11), Modulator (9), regelbarer Ausgangsverstärker (22), Entzerrer (24), CDMA-Prozessor (18), Kanalcoder/-decoder (25), Sprach-/Datenmultiplexer (26), Sprach- und Bedieninterface (27), Dateninterface (28), SIM(subscriber identity module)(30), Geräteidentifikationskennungseinheit (29), Mikroprozessor (31), zentrale Taktversorgungseinheit (32), Synchronisationseinrichtung (33), Notstromversorgungeinheit oder Stromversorgungseinheit(35) sowie Regeleinrichtungen zur Regulierung des Empfangs- und Sendepegels zugeordnet sind.

14. Anordnung nach Anspruch 13, **dadurch gekennzeichnet, daß** der CDMA-Prozessor (18) zum Spreizen der Daten und zum Aufprägen einer Richtungskennung mit diesem zugewiesener Spreizungssequenz, der Modulator (9) zum Aufmodulieren dieser Signale auf eine Trägerfrequenz, der Verstärker(22) zur Anpassung des beim Empfänger notwendigen Eingangspegels für ein optimales Korrelatorergebnis und der Netzkoppler (10) zur Einspeisung des gespreizten und richtungskodierten Datenstromes in die Niederspannungsleitung (2) zur Weiterleitung an die Signalaufbereitungseinheit (7) oder die Netzübergangseinheit (8) vorgesehen ist.

15. Anordnung nach einem der Ansprüche 12 bis 14, **dadurch gekennzeichnet, daß** der Aufbau der Signalaufbereitungseinheit (7) im wesentlichen dem des Nutzerendgerätes(6) entspricht, wobei die Signalverarbeitungseinheiten und ggf. Teile der Taktversorgungseinheit und der Synchronisationseinrichtung entsprechend der Anzahl der zu regenerierenden Kanäle multipliziert mit der Anzahl der Signalrichtungen ausgelegt und die fehlerkorrigierten Signale aus dem Kanaldecoder direkt oder über eine Koppelmatrix (41) in den nächsten Kanalcoder einspeisbar sind, und ein über den Mikroprozessor (31) oder einen kundenspezifischen Schaltkreis verwalteter Wertespeicher (37) zum Ablegen der aktuellen Kanalzuordnungen mit entsprechenden Richtungskennungen, der zu nutzenden Sequenz und weiterer Informationen zur Signalquelle und -senke vorgesehen ist.

16. Anordnung nach Anspruch 15, **dadurch gekennzeichnet, daß** die Signalaufbereitungseinheit (7) für den Einsatz im Ortsverteilerkasten (3) entsprechend der Anzahl zu versorgender Netzteilabschnitte mit zusätzlichen Netzkopplern, Modulatoren, Demodulatoren, regelbaren Ausgangs- und Low-Noise-Eingangsverstärkern, Regeleinrichtungen der Sende- und Empfangssignale sowie Frequenzweichen oder -filter ausgelegt ist.

17. Anordnung nach Anspruch 15 und 16, **dadurch gekennzeichnet, daß** der mit dem Entzerrer (24) verbundene CDMA-Prozessor (18) der Signalaufbereitungseinheit (7) empfangsseitig einen Integrator (12) und einen Schwellwertdetektor (13) zur Wiedergewinnung der übertragenen Daten beinhaltet, wobei im CDMA-Prozessor (18) ein Multiplizierer (17) zum sendeseitigen Multiplizieren des regenerierten Datensignals mit einer Spreizungssequenz (19) und einer Richtungskennung (20) des zu adressierenden Nutzerendgerätes (6) oder der Signalaufbereitungseinheit (7) vorgesehen ist.

18. Anordnung nach einem der Ansprüche 12 bis 17, **dadurch gekennzeichnet, daß** der Aufbau der Netzübergangseinheit (8) dem der Signalaufbereitungseinheit (7) entspricht, jedoch die Funktionsgruppen der digitalen Signalverarbeitung (18, 24, 25) und ggf. der Taktversorgung (32) mehrfach, mindestens aber entsprechend der einfachen Anzahl der zur übergeordneten Telekommunikationseinrichtung (48) bereitgestellten Übertragungskanäle zuzüglich der für jede Niederspannungsleitung benötigten Synchronisationskanäle, ausgelegt sind, und Netzkoppler und Frontends zur Niederspannung entsprechend der Anzahl der zu versorgenden Niederspannungsbereiche vorgesehen sind, wobei zur Kanalzuteilung durch Konfiguration der Koppelmatrix (41) und CDMA-Prozessoren ein Mikroprozessorsystem vorgesehen ist.

19. Anordnung nach Anspruch 18, **gekennzeichnet durch** die Zuordnung einer Geräteidentifikationskennungseinheit sowie eines Wertespeichers zur Speicherung der Daten aller aktiven Verbindungen, wie Wegeinformation, Kanalzuordnung, Signalqualität, Nutzerendgerätekennung, genutzte Dienste und zugeordneter Übertragungskanal zur übergeordneten Telekommunikationszentrale.

20. Anordnung nach Anspruch 18 und 19, **dadurch gekennzeichnet, daß** zwischen der Koppelmatrix (41) und dem Übertragungssystem zum übergeordneten Telekommunikationsnetz (48) Datenraten- und Protokollanpassungssysteme zur Anpassung von Datenformaten für einen Datendienst vorgesehen sind.

21. Anordnung nach einem der Ansprüche 18 bis 20, **dadurch gekennzeichnet, daß** die Zuführung der dekodierten Datensignale zum Übertragungssystem über die Koppelmatrix erfolgt und auf der Telekommunikationsnetzseite n * 2Mbit/s-Übertragungssysteme für Kupfer- oder LWLleitungen oder Funkverbindungen - bei n = 1, 2, 3... - vorgesehen sind.

22. Anordnung nach einem der Ansprüche 12 bis 21, **dadurch gekennzeichnet, daß** alle aktiven Teilkomponenten an eine Stromversorgungseinheit (35) angeschlossen sind, mit den Netzkopplern (10, 15, 16) verbunden sind und über eine Notstromversorgungseinrichtung verfügen.

23. Anordnung nach einem der Ansprüche 12 bis 22, **dadurch gekennzeichnet, daß** in Bereichen stark verzweigter Kabelsysteme (53) und/oder Störspannungseinkopplungen (54) für den Frequenzbereich der Datenübertragung auf der Niederspannungsleitung (2) Dämpfungselemente (55) zwischen der Störquellen-Einkoppelstelle (46) und der Einkoppelstelle für das Datenübertragungssystem (47) angeordnet sind.

24. Anordnung nach einem der Ansprüche 12 bis 17, **dadurch gekennzeichnet, daß** die Signalaufbereitungseinheiten (7) in oder in der Nähe von Ortsverteilerkästen (3), Lichtmasten und Hausanschlußkästen untergebracht sind, wobei der Abstand zwischen den Signalaufbereitungseinheiten etwa bei 100 m und in Bereichen starker Dämpfung deutlich darunter liegt.

25. Anordnung nach einem der Ansprüche 12 bis 24, **dadurch gekennzeichnet, daß** das übergeordnete Telekommunikationsnetz (48) ein Heimatadressenregister (49) und ein Besucherregister (50) zur Verwaltung eines teilmobilen Dienstes, Kontrollregister (60) für die Teilnehmerzugangsberechtigung, Kontrollregister (61) für die Registrierung der zugelassenen Endgeräte, Überwachungsstationen (52) zur Überwachung des Datenverkehrs mit den Netzübergangs- und den Signalaufbereitungseinheiten (8, 7) in bezug auf Auslastung, Qualität und Verfügbarkeit, ein Koppelnetz (56) zur Weiterleitung der Gespräche aus dem Niederspannungsnetz zu einer Transitstelle (57) oder der Initialisierungskanäle zum Mikroprozessorsystem (38), einen Server (51) zur Auswahl der kürzesten Übertragungswege (58) zum Teilnehmer und eine Mikroprozessoreinheit (59) zur Festlegung des optimalen Übertragungsweges von der Zentrale zum Teilnehmer umfaßt.

26. Anordnung nach Anspruch 13, **dadurch gekennzeichnet, daß** die Funktionseinheiten des Nutzerendgerätes (6) mit Ausnahme des Sprach- und Bedieninterface (27) in einem in eine Niederspannungssteckdose steckbaren Steckadapter zum Anschluß handelsüblicher Endgeräte für die Sprach- und Datenkommunikation, der zur Endgeräteseite hin die dienstspezifischen physikalischen Schnittstellen und den zugehörigen Protokollstack unterstützt, zusammengefaßt sind.

27. Anordnung nach Anspruch 13, **dadurch gekennzeichnet, daß** die Funktionseinheiten des Nutzerendgerätes (6) mit Ausnahme des Sprach- und Bedieninterface (27) zur Einwirkung von Sprach- und Datendiensten an die Stromzuführungseinheit eines Stromverbrauchers angeschlossen sind.

28. Anordnung nach Anspruch 13, **dadurch gekennzeichnet, daß** Funktionseinheiten des Nutzerendgerätes (6) in elektrische Verbraucher mit direktem Klemm-, Schraub oder Steckanschluß zum Stromnetz zur Fernüberwachung und -bedienung derselben integriert sind.

29. Anordnung nach einem der Ansprüche 12 bis 28, **dadurch gekennzeichnet, daß** anstelle der Niederspannungsleitung (2) eine Breitbandverkabelungsanlage vorgesehen ist.

## Claims

1. A data transmission method for two-way communication using low-voltage power line systems linked to a higher order telecommunication network, **characterized in that**
the data transmission within the low-voltage power line system takes place at a highfrequency range of up to 30 MHz using band spreading of the data signals and at a transmission level below the specified radio- and power line voltage interference limit,
and said band-spread data is given a direction coding to specify a logical direction within the low-voltage power line system, whereby said data signals are band-spread by means of various sequences of a family of pseudo-random numbers to allow for a multi-user structure operation,
whereby the binary data signal sequences within the low-voltage power line system which are each user-specifically spread and direction-specifically coded are, within attenuation dependent distances, recognized, regenerated and coded with a new direction-code for forwarding the data signals.

2. The method according to claim 1, **characterized in that** user-specific band spreading of the data signals is carried out using sequences of one or more matched families of pseudo-random number sequences such as Gold sequences.

3. The method according to claim 2, **characterized in that** adjacent sequences of pseudo-random numbers do not contain similar sequences to prevent mutual interference of users located in different network areas.

4. The method according to any of the claims 1 to 3, **characterized in that** the data stream is multiplied by a Walsh sequence after band spreading using the direct sequencing technique to give the data stream a logical direction in the low-voltage power line system.

5. The method according to claim 4, **characterized in that** the length of the Walsh sequences used for the direction coding is smaller than the band spreading sequences used.

6. The method according to any of the claims 1 to 3, **characterized in that** the logical direction of the data stream in the low-voltage power line system is identified by a controlled and structured assignment of selected families of pseudo-random number sequences to individual network areas that are enclosed by two signal conditioning units or by one network interface unit and one signal conditioning unit.

7. The method according to any of the claims 1 to 3, **characterized in that** the band spread signals are transmitted in the emission and receive direction on separate time slots or frequency bands in order to separate directions using time or frequency multiplexing.

8. The method according to any of the claims 1 to 7, **characterized in that** the transmission levels of the individual transmitting units within a network area are regulated in such a way that all overlaid signals of one frequency within a controlled time slot are at nearly the same level at the receivers of the signal conditioning units or the network interface unit.

9. The method according to any of the claims 1 to 8, **characterized in that** prior to the actual data transfer, an initializing phase is provided comprising the emission of an initializing sequence including the ID of the respective user and the user terminal device, a logon sequence and a subsequent assignment of a spread sequence to the respective user.

10. The method according to claim 9, **characterized in that** the Ids of the respective user and the user terminal are checked for device approval of the terminal and communication authorization of said user in the higher order telecommunication network after emitting the initialization sequence.

11. The method according to claim 9, **characterized in that** emergency call signals can be emitted with the initialization sequence.

12. An arrangement for carrying out the method according to any of the claims 1 to 11 comprising a low-voltage power line system having user terminal devices connected to it, local line distributor boxes and network stations, and a higher order telecommunication network connected to said low-voltage power line system, whereby the network interface units are assigned to the network stations that link the low-voltage power line system with the telecommunication network and whereby the signal conditioning units are connected to the low-voltage power line system **characterized in that** the network interface units (8), the signal conditioning units (7) which are arranged at specific distances according to the attenuation degree, and the user terminal devices (6) are designed for band spreading the data signals at a transmission level below the specified radio- and power line voltage interference limit and for direction coding the data signals, and the signal conditioning units are provided in addition to regenerate and direction-specifically transmit the data signals.

13. The arrangement according to claim 12, **characterized in that** the user terminal device (6) is associated with the following functional units: gateway (10), frequency separator or filter (34), controllable low-noise input amplifier (23), IQ demodulator (11), modulator (9), controllable output amplifier (22), equalizer (24), CDMA processor (18), channel encoder/decoder (25), voice/data multiplexer (26), voice and operating interface (27), data interface (28), SIM (subscriber identity module) (30), device identification unit (29), microprocessor (31), central clock generating unit (32), synchronization facility (33), emergency power supply unit or power supply unit (35) and controllers for controlling the input and output levels.

14. The arrangement according to claim 13, **characterized in that** the following are provided: a CDMA processor (18) for spreading the data and adding the direction code using its allocated spread sequence, a modulator (9) for modulating the signals onto a carrier frequency, an amplifier (22) to adjust the input level required at the receiving end for optimum correlator performance, and a gateway (10) for feeding the spread and direction-coded data steam into the low-voltage line (2) and forwarding it to the signal conditioning unit (7) or network interface unit (8).

15. The arrangement according to any one of the claims 12 to 14, **characterized in that** the layout of the signal conditioning unit (7) is basically similar to that of the user terminal device (6), whereby the signal conditioning units and if applicable parts of the clock generating unit and of the synchronization facility are configured in accordance with the number of channels to be regenerated multiplied by the number by signaling directions, and the error-corrected data signals are fed from the channel decoder into the nearest channel encoder either directly or via a switching matrix (41), and a data memory (37) managed by the microprocessor (31) or a customer-specific circuit is provided in which the current channel assignments with the associated direction codes, the sequence to be used as well as other signal source and sink information are stored.

16. The arrangement according to claim 15, **characterized in that** the signal conditioning unit (7) is designed for use in local distributor boxes (3) and comprises additional gateways, modulators, demodulators, controllable output and low-noise input amplifiers, controlling facilities for emission and receiving signals and frequency separators or filters depending on the number of network areas to be covered.

17. The arrangement according to claims 15 and 16, **characterized in that** the CDMA processor (18) of the signal conditioning unit (7) that is connected to an equalizer (24) on its receive side comprises an integrator (12) and a threshold detector (13) for retrieving the data transmitted, and that the CDMA processor (18) is equipped with a multiplier (17) for multiplying the regenerated data signal on the transmit side with a spread sequence (19) and a direction code (20) of the user terminal device (6) to be addressed or the signal conditioning unit (7).

18. The arrangement according to one of the preceding claims 12 to 17, **characterized in that** the layout of the network interface unit (8) is basically similar to that of the signal conditioning unit (7) but that the functional groups of digital signal processing (18, 24, 25) and if applicable the clock generator (32) are configured as multiple units, at least in accordance with the simple number of transmission channels provided to the higher order telecommunication facility (48) plus the number of synchronization channels required for each low-voltage line, and that gateways and front ends to low voltage are provided in accordance with the number of low-voltage areas to be covered, and **in that** a microprocessor system is provided for channel assignment by configuration of the switching matrix (41) and CDMA processors.

19. The arrangement according to claim 18, **characterized in that** a device ID unit and a data memory for storing data of all active connections consisting of routing information, channel assignment, signal quality, user terminal device ID, services used, and the assigned transmission channel, are assigned to the higher ordered telecommunication center station.

20. The arrangement according to claims 18 and 19, **characterized in that** data rate systems and protocol matching systems are provided between the switching matrix (41) and the higher order telecommunication network (48) to make the data compatible for a data service.

21. The arrangement according to one of the preceding claims 18 to 20, **characterized in that** the decoded data signals are fed into the transmission system via the switching matrix, and that n * 2 Mbps transmission systems for copper or optical fiber lines or cellular connections are provided on the telecommunication network side for n = 1, 2, 3...

22. The arrangement according to one of the preceding claims 12 to 21, **characterized in that** all active components are connected to a power supply unit (35) and to gateways (10, 15, 16), and that they are equipped with an emergency power supply unit.

23. The arrangement according to one of the preceding claims 12 through 22, **characterized in that** in areas where cable systems are highly branched (53) and/or where there are noise voltage inputs (54) for the frequency range of data transmission on the low-voltage line (2), attenuation elements (55) are placed between the noise voltage input point (46) and the input point for the data transmission system (47).

24. The arrangement according to one of the preceding claims 12 to 17, **characterized in that** the signal conditioning units (7) are placed in or close to local line distributor boxes (3), lamp posts, and house connection boxes, the distance between signal conditioning units being about 100 m or considerably smaller in areas of strong attenuation.

25. The arrangement according to one of claims 12 to 24, **characterized in that** the higher order telecommunication network (48) includes a home location register (49) and a visitor location register (50) for managing a partly mobile service, a check register (60) for subscriber authorization, a check register (61) for registration of approved terminals, monitoring stations (52) for monitoring data exchange of network interface and signal conditioning units (8, 7) as regards traffic load, quality and availability, a switching network (56) for forwarding calls from the low-voltage system to a transit point (57) or the initialization channels to the microprocessor system (38), a server (51) for selecting the shortest routes (58) to the subscriber, and a microprocessor unit (59) for determining the optimum route from the switching center to the subscriber.

26. The arrangement according to claim 13, **characterized in that** the functional units of the user terminal device (6) except the voice and operating interface (27) are grouped in a plug-in adapter for connecting commercial voice and data communication terminals to a low-voltage socket that supports the service-specific physical interfaces and the associated protocol stack on the terminal side.

27. The arrangement according to claim 13, **characterized in that** the functional units of the user terminal device (6) except the voice and operating interface (27) are connected to the power supply unit of a power consumer for operation of voice and data services.

28. The arrangement according to claim 13, **characterized in that** functional units of the user terminal device (6) are integrated into electric consumers with direct clamp-type, screw-type, or plug-in connection to the power network for their remote monitoring and control.

29. The arrangement according to one of the preceding claims 12 to 28, **characterized in that** a wideband cable system is provided instead of the low-voltage line (2).

## Revendications

1. Procédé de transfert de données lors d'une communication bidirectionnelle dans des réseaux basse tension couplés à un réseau de télécommunication supérieur, **caractérisé en ce que** le transfert de données dans le réseau basse tension s'effectue dans une plage de haute fréquence allant jusqu'à 30 MHz, avec un étalement de la bande des signaux de données et un niveau d'émission se situant en dessous de la limite prescrite de la tension perturbatrice et du dérangement de ligne, et **en ce que** les signaux, étalés avec différentes séquences d'une famille de nombres pseudo-aléatoires afin de garantir une structure multi-utilisateur, sont équipés d'un code directionnel destiné à indiquer une direction logique dans le réseau basse tension, les suites de données binaires, étalées en fonction de l'utilisateur et repérées en fonction de la direction, étant identifiées par corrélation, à des distances déterminées par le degré d'atténuation, dans le réseau basse tension, à l'aide des séquences prescrites puis régénérées et évaluées avec un nouveau code directionnel afin de retransmettre les signaux.

2. Procédé conforme à la revendication 1, **caractérisé en ce que** l'étalement de bande, propre à chaque utilisateur, des signaux de données se fait avec des séquences d'une ou de plusieurs familles coordonnées de suites de nombres pseudo-aléatoires, telles que des suites de Gold.

3. Procédé conforme à la revendication 2, **caractérisé en ce que**, pour éviter la perturbation mutuelle d'utilisateurs placés dans des sous-secteurs différents du réseau, des suites voisines de nombres pseudo-aléatoires ne contiennent aucune séquence similaire.

4. Procédé conforme à l'une des revendications 1 à 3, **caractérisé en ce que** l'indication de la direction logique du flux de données dans le réseau basse tension s'effectue, après étalement de la bande par une technique en séquence directe, en multipliant le flux de données par une suite de Walsh.

5. Procédé conforme à la revendication 4, **caractérisé en ce que** la longueur des suites de Walsh prévues pour le codage directionnel est inférieure à celle des séquences d'étalement de bande utilisées.

6. Procédé conforme à l'une des revendications 1 à 3, **caractérisé en ce que** l'indication de la direction logique du flux de données dans le réseau basse tension s'effectue par l'attribution rationnelle et structurée de familles sélectionnées de suites de nombres pseudo-aléatoires à différents sous-secteurs du réseau, qui sont entourés de deux unités de régénération de signaux ou d'une unité passerelle et d'une unité de régénération de signaux.

7. Procédé conforme à l'une des revendications 1 à 3, **caractérisé en ce que**, afin de séparer les directions lors d'un processus de multiplexage par partage du temps ou des fréquences, la transmission des signaux à bande étalée dans la direction d'émission et de réception se fait à chaque fois selon des intervalles de temps ou dans des bandes de fréquence distincts.

8. Procédé conforme à l'une des revendications 1 à 7, **caractérisé en ce que** les niveaux d'émission des différentes stations émettrices d'un sous-secteur du réseau sont réglés de façon à ce que, près des récepteurs de l'unité de régénération des signaux ou de l'unité passerelle, tous les signaux superposés d'une fréquence aient presque le même niveau dans l'intervalle de temps contrôlé.

9. Procédé conforme à l'une des revendications 1 à 8, **caractérisé en ce que** sont prévues, avant le transfert effectif des données, une phase d'initialisation consistant en l'émission d'une séquence d'initialisation avec le numéro d'identification de chaque utilisateur et du terminal d'utilisateur ainsi que d'une séquence d'annonce, et une assignation consécutive d'une séquence d'étalement pour chaque utilisateur.

10. Procédé conforme à la revendication 9, **caractérisé en ce que** dans le réseau de télécommunication supérieur sont vérifiées, pour le numéro d'identification de chaque utilisateur et du terminal d'utilisateur, l'habilitation du terminal et l'autorisation de communiquer de l'utilisateur, après l'émission de la séquence d'initialisation.

11. Procédé conforme à la revendication 9, **caractérisé en ce que** des signaux de secours peuvent être enregistrés avec la séquence d'initialisation.

12. Dispositif servant à effectuer le procédé conforme aux revendications 1 à 11, consistant en un réseau basse tension auquel sont connectés des terminaux d'utilisateur, des boîtes locales de distribution et des stations de réseau, et en un réseau de télécommunication supérieur au réseau basse tension, des unités passerelles étant affectées aux stations de réseau pour servir d'éléments de liaison entre le réseau basse tension et le réseau de télécommunication et des unités de régénération des signaux étant intégrées dans le réseau basse tension, **caractérisé en ce que** les unités passerelles (8), les unités de régénération des signaux (7) placées selon des intervalles déterminés par le degré d'atténuation, et les terminaux d'utilisateur (6) sont conçus pour l'étalement de la bande des signaux de données à un niveau d'émission inférieur à la limite prescrite de la tension perturbatrice et du dérangement de ligne et pour le codage directionnel des signaux de données, et **en ce que** les unités de régénération des signaux (7) sont en outre destinés à la régénération et à la retransmission, en fonction de la direction, du flux de données.

13. Dispositif conforme à la revendication 12, **caractérisé en ce que** sont assignées au terminal d'utilisateur (6) les unités fonctionnelles suivantes : passerelle (10), diplexeur ou filtre (34), amplificateur d'entrées réglable à faible bruit (23), démodulateur IQ (11), modulateur (9), amplificateur de sorties réglable (22), correcteur (24), processeur AMRC (18), codeur/décodeur de canal (25), multiplexeur voix/données (26), interface vocale et de commande (27), interface de données (28), SIM (subscriber identity module/module d'identification d'abonné) (30), unité d'identification d'appareil (29), microprocesseur (31), unité centrale d'horloge (32), dispositif de synchronisation (33), unité d'alimentation en courant de secours ou unité d'alimentation en courant (35), ainsi que dispositifs de réglage servant à réguler le niveau de réception et d'émission.

14. Dispositif conforme à la revendication 13, **caractérisé en ce que** le processeur AMRC (18) est destiné à étaler les données et à imprimer un code directionnel à l'aide de la séquence d'étalement assignée, le modulateur (9) à moduler ces signaux à une fréquence porteuse, l'amplificateur (22) à adapter le niveau d'entrée nécessaire chez le récepteur pour un résultat de corrélation optimal et la passerelle (10) à injecter le flux de données étalées et codées en fonction de la direction dans la ligne basse tension (2), afin de les retransmettre à l'unité de régénération de signaux (7) ou à l'unité passerelle (8).

15. Dispositif conforme à l'une des revendications 12 à 14, **caractérisé en ce que** la structure de l'unité de régénération des signaux (7) correspond en grande partie à celle du terminal d'utilisateur (6), les unités de traitement des signaux et, le cas échéant, certains éléments de l'unité d'horloge et du dispositif de synchronisation étant conçus en fonction du nombre des canaux à régénérer multiplié par le nombre des directions de signaux, et les signaux corrigés pouvant être injectés directement ou par le biais d'une matrice de couplage (41), depuis le décodeur de canal, dans le codeur de canal suivant, et un registre de valeurs (37) géré par le microprocesseur (31) ou par un circuit de commande client étant prévu pour l'enregistrement des affectations actuelles de canaux avec les codes directionnels correspondants, de la séquence à utiliser et des autres informations destinées à la source et au collecteur des données.

16. Dispositif conforme à la revendication 15, **caractérisé en ce que** l'unité de régénération des signaux (7) est conçue, pour son utilisation dans la boîte locale de distribution (3), avec un nombre supplémentaire de passerelles, de modulateurs, de démodulateurs, d'amplificateurs réglables de sorties et d'entrées à faible bruit, de dispositifs de réglage des signaux d'émission et de réception ainsi que de diplexeurs ou de filtres, en fonction du nombre des sous-secteurs de réseau à alimenter.

17. Dispositif conforme à la revendication 15 et 16, **caractérisé en ce que** le processeur. AMRC (18) de l'unité de régénération des signaux (7), relié au correcteur (24), comporte du côté récepteur un intégrateur (12) et un détecteur de la valeur de seuil (13) servant à récupérer les données transmises, et qu'il comporte, du côté émetteur, un multiplicateur (17) servant à multiplier le signal de données régénéré par une séquence d'étalement (19) et un code directionnel (20) du terminal d'utilisateur (6) à adresser ou de l'unité de régénération des signaux (7).

18. Dispositif conforme à l'une des revendications 12 à 17, **caractérisé en ce que** la structure de l'unité passerelle (8) correspond à celle de l'unité de régénération des signaux (7), mais **en ce que** les ensembles fonctionnels du traitement numérique des signaux (18, 24, 25) et, le cas échéant, de l'unité d'horloge (32) sont conçus en plusieurs exemplaires, et au moins en fonction du nombre simple de voies de transmission mises à disposition de l'installation de télécommunication supérieure (48) en plus des canaux de synchronisation requis pour chaque ligne basse tension, et **en ce que** des passerelles et des installations frontales destinées à la basse tension sont prévues en fonction du nombre de zones basse tension à alimenter, un système microprocesseur étant prévu pour l'assignation des canaux par configuration de la matrice de couplage (41) et des processeurs AMRC.

19. Dispositif conforme à la revendication 18 **caractérisé par** l'affectation à la centrale de télécommunication supérieure d'une unité d'identification d'appareil ainsi que d'un registre de valeurs destiné à la mémorisation des données de toutes les liaisons actives, telles que l'information d'acheminement, l'affectation de canal, la qualité de signal, l'identification du terminal d'utilisateur, les services utilisés et le canal de transmission assigné.

20. Dispositif conforme à la revendication 18 et 19, **caractérisé en ce que** sont prévus, entre la matrice de couplage (41) et le système de transmission vers le réseau de télécommunication supérieur (48), des systèmes de débit de données et d'adaptation de protocole afin d'adapter les formats de données pour un service de transmission de données.

21. Dispositif conforme à l'une des revendications 18 à 20, **caractérisé en ce que** les signaux de données décodés sont amenés vers le système de transmission par la matrice de couplage et **en ce que** sont prévus, du côté du réseau de télécommunication, des systèmes de transmission à n * 2Mbit/s pour lignes de cuivre ou guides d'ondes lumineuses ou pour liaisons radio, avec n = 1,2,3... .

22. Dispositif conforme à l'une des revendications 12 à 21, **caractérisé en ce que** tous les composants partiels actifs sont raccordés à une unité d'alimentation en courant (35), qu'ils sont reliés aux passerelles (10, 15, 16) et qu'ils disposent d'une installation d'alimentation en courant de secours.

23. Dispositif conforme à l'une des revendications 12 à 22, **caractérisé en ce que**, dans des secteurs de systèmes câblés (53) à nombreuses ramifications et/ou des couplages à tension perturbatrice, sont placés, pour la plage de fréquence du transfert des données sur la ligne basse tension (2), des éléments d'atténuation (55) entre le point de couplage des sources de parasites (46) et le point de couplage pour le système de transfert des données (47).

24. Dispositif conforme à l'une des revendications 12 à 17, **caractérisé en ce que** les unités de régénération des signaux (7) sont placées dans ou à proximité de boîtes locales de distribution (3), de pylônes d'éclairage et de boîtes de branchement d'immeubles, la distance entre les unités de régénération des signaux étant d'environ 100 m, ou nettement moins dans les zones où l'atténuation est importante.

25. Dispositif conforme à l'une des revendications 12 à 24, **caractérisé en ce que** le réseau de télécommunication supérieur (48) comprend un registre d'adresses des domiciles (49) et un registre des visiteurs (50) servant à gérer un service partiellement mobile, des registres de contrôle (60) pour les autorisations d'accès des abonnés, des registres de contrôle (61) pour l'enregistrement des terminaux autorisés, des postes de contrôle (52) afin de surveiller, avec les unités passerelles et les unités de régénération des signaux (8, 7), la charge, la qualité et la disponibilité du trafic de données, un réseau de couplage (56) pour la retransmission des communications hors du réseau basse tension vers un point de transit (57) ou hors des canaux d'initialisation vers le système microprocesseur (38), un serveur (51) pour la sélection des trajets de transmission (58) les plus courts vers l'abonné et une unité-microprocesseur (59) pour la détermination du trajet de transmission optimal depuis la centrale jusqu'à l'abonné.

26. Dispositif conforme à la revendication 13, **caractérisé en ce que** les unités fonctionnelles du terminal utilisateur (6) sont regroupées, à l'exception de l'interface vocale et de commande (27), dans un adaptateur enfichable dans une prise de courant basse tension, afin de raccorder des terminaux usuels de transmission voix/données, et qui supporte, du côté du terminal utilisateur, les interfaces physiques spécifiques au service et les piles de protocoles associées.

27. Dispositif conforme à la revendication 13, **caractérisé en ce que** les unités fonctionnelles du terminal utilisateur (6) sont raccordées, à l'exception de l'interface vocale et de commande (27), à l'unité d'alimentation en courant d'un récepteur d'électricité, afin d'effectuer les services voix/données.

28. Dispositif conforme à la revendication 13, **caractérisé en ce que** des unités fonctionnelles du terminal d'utilisateur (6) sont intégrées dans des récepteurs électriques à l'aide d'une connexion directe avec le réseau électrique par serrage, vissage ou enfichage, afin de surveiller et de commander ceux-ci à distance.

29. Dispositif conforme à l'une des revendications 12 à 28, **caractérisé en ce qu'**est prévue une installation de câbles à large bande à la place de la ligne basse tension (2).
